# EUROPÄISCHE PATENTSCHRIFT

(11) **EP 4 525 675 B1**
(45) Veröffentlichungstag und Bekanntmachung des Hinweises auf die Patenterteilung: **04.03.2026**
(21) Anmeldenummer: 23727938.5
(22) Anmeldetag: 15.05.2023
(51) Int. Cl.: A47J 36/06, A47J 43/07

(54) **KÜCHENMASCHINE UND WIEGETELLER FÜR EINE KÜCHENMASCHINE**
KITCHEN APPLIANCE AND WEIGHING PLATE FOR A KITCHEN APPLIANCE
ROBOT DE CUISINE ET PLATEAU DE PESAGE POUR UN ROBOT DE CUISINE

(30) Priorität: 16.05.2022 DE 202022102682 U
(43) Veröffentlichungstag der Anmeldung: 26.03.2025
(73) Patentinhaber: Wundermix GmbH, 85748 Garching b. München (DE)
(72) Erfinder: KEUSGEN, Adrian, 79346 Endingen am Kaiserstuhl (DE)
(74) Vertreter: Patentanwälte Bauer Vorberg Kayser
(86) Internationale Anmeldenummer: PCT/EP2023/062969
(87) Internationale Veröffentlichungsnummer: WO 2023/222600

(56) Entgegenhaltungen:
- WO-A1-2011/113204
- DE-A1- 102011 051 151
- DE-A1- 102014 111 193
- DE-U1- 202021 000 402

## Beschreibung

Die vorliegende Erfindung betrifft eine Küchenmaschine, umfassend eine Küchenmaschinen-Basisstation mit einer Wiegeeinrichtung, einen zur Verarbeitung und/oder Aufbewahrung von Lebensmitteln eingerichteten Topf, der in die Küchenmaschinen-Basisstation einsetzbar ist, und einen zur Aufnahme von Wiegegut ausgebildeten Wiegeteller, der in Bezug zur Küchenmaschinen-Basisstation in einer Wiegestellung positionierbar ist, wobei in der Wiegestellung ein Gewicht von seitens des Wiegetellers aufgenommenem Wiegegut unter Einsatz der Wiegeeinrichtung ermittelbar ist.

Küchenmaschinen, insbesondere Multifunktionsküchenmaschinen, wie beispielsweise unter den Marken Thermomix^{®} oder Monsieur Cuisine^{®} vertrieben, können für vielerlei Bearbeitungsprozesse von Lebensmitteln verwendet werden. Auch das Erhitzen von Lebensmitteln sowie die Zubereitung ganzer Speisen kann unter Einsatz derartiger Küchenmaschinen erfolgen. Küchenmaschinen können beispielsweise eine Heiz-, Rühr-, Misch-, Zerkleinerungs-, Schneid-, Schäl- etc. Funktion aufweisen.

Derartige Küchenmaschinen weisen häufig eine Wiegefunktion auf, die in Form einer Wiegeeinrichtung in der Küchenmaschine implementiert ist. Damit können Lebensmittel unmittelbar in einem in die Küchenmaschinen-Basisstation eingesetzten Topf (z. B. ein Zubereitungstopf) eingewogen werden. Dazu sind entsprechende Sensoren oder Messaufnehmer in die Küchenmaschinen-Basisstation (z. B. Standfüße der Küchenmaschinen-Basisstation) integriert. Wird eine Gewichtskraft auf die Küchenmaschinen-Basisstation ausgeübt, so kann ein entsprechendes Gewicht bestimmt werden. Entsprechend kann auch unabhängig von der Positionierung eines Wiegeguts (z. B. abzuwiegende Lebensmittel) innerhalb des Topfes, die Wiegefunktion der Küchenmaschine genutzt werden. Beispielsweise kann eine Schale oder ein Teller auf einem Topfdeckel des Topfes (sofern dieser in die Küchenmaschinen-Basisstation eingesetzt ist) positioniert werden. Ein Wiegegut kann sodann auf die Schale oder den Teller aufgegeben werden. Daraufhin kann das Wiegegut unter Nutzung der Wiegefunktion der Küchenmaschine gewogen werden (also dessen Gewicht bzw. Masse bestimmt werden). Das Dokument WO2011113204A1 offenbart eine Küchenmaschine mit einer Wiegeeinrichtung.

Auch unabhängig von einer Verwendung des Topfes kann ein Wiegegut mit einer solchen Küchenmaschine gewogen werden. Hierzu offenbart die DE 20 2021 000 402 U1 einen Wiegeteller, der in einer eigentlich zur Positionierung eines Zubereitungstopfes vorgesehenen Aufnahme einer Küchenmaschinen-Basisstation anstelle des Topfes positioniert werden kann, um ein Wiegegut unmittelbar auf dem Teller unter Einsatz einer in die Küchenmaschine integrierten Wiegefunktion zu wiegen. Zum Einsetzen in die Aufnahme ist an einer Unterseite des Wiegetellers ein Kupplungsstück angeordnet, welches in eine Kupplungsaufnahme an der Basisstation einsetzbar ist.

Eine solche Positionierung erfolgt in Bezug auf die Gesamthöhe der Küchenmaschine relativ weit unten, was beim Abwiegen durch einen vor der Küchenmaschine stehenden Nutzer (je nach Größe des Nutzers) gegebenenfalls auf einer unkomfortablen Arbeitshöhe erfolgen muss. Ferner ist der in der DE 20 2021 000 402 U1 auf die Funktionalität des Abwiegens von Wiegegut beschränkt. Bei Zubehörteilen für Multifunktionsküchenmaschinen ist es allerdings vorteilhaft, wenn auch diese Zubehörteile mehrere verschiedene Funktionen in ein und demselben Zubehörteil vereinen. Dadurch wird die Gesamtzahl benötigter Zubehörteile reduziert, was kostenschonen, materialsparend und umweltschonend ist.

Entsprechend besteht ein wachsender Bedarf auch an sich bekannte Wiegeteller für Küchenmaschinen multifunktional zu gestalten.

Es ist daher eine Aufgabe der vorliegenden Erfindung eine Küchenmaschine bereitzustellen, bei welcher die Multifunktionalität weiter erhöht wird.

Gelöst wird diese Aufgabe mit dem Gegenstand des Anspruchs 1.

Zunächst betrifft die vorliegende Erfindung eine Küchenmaschine, umfassend
a. eine Küchenmaschinen-Basisstation mit einer Wiegeeinrichtung
b. einen zur Verarbeitung und/oder Aufbewahrung von Lebensmitteln eingerichteten Topf, der in die Küchenmaschinen-Basisstation einsetzbar ist,
c. und einen zur Aufnahme von Wiegegut ausgebildeten Wiegeteller, der in Bezug zur Küchenmaschinen-Basisstation in einer Wiegestellung positionierbar ist, wobei in der Wiegestellung ein Gewicht von seitens des Wiegetellers aufgenommenem Wiegegut unter Einsatz der Wiegeeinrichtung ermittelbar ist,
wobei der Wiegeteller zudem dazu ausgebildet ist, auf eine Topföffnung des Topfes aufgesetzt zu werden und den Topf als Deckel lösbar zu verschließen.

Eine solche in einer Küchenmaschinen-Basisstation vorgesehene Wiegeeinrichtung ist eine sensorische Einrichtung, mit der ein Gewicht eines Wiegeguts (z. B. zu wiegende Lebensmittel, Zutaten für Speisen oder dergleichen) in Form einer Masse (Einheit z. B. mg, g oder kg) ermittelt werden kann. Eine Wiegeeinrichtung kann einen oder mehrere Sensoren umfassen, die an geeigneten Stellen der Küchenmaschinen-Basisstation angeordnet sind, beispielsweise in Standfüßen der Küchenmaschinen-Basisstation. Wird eine Gewichtskraft (z. B. durch die Last eines Wiegeguts) auf die Küchenmaschinen-Basisstation, auf ein mit dieser verbundenes Bauteil oder einen darin eingesetzten Topf ausgeübt, so kann ein entsprechendes Gewicht unter Einsatz der Wiegeeinrichtung bestimmt werden. Ein so bestimmtes Gewicht kann beispielsweise durch eine optische Anzeige (z. B. auf einem Display des Küchengeräts oder eines damit signaltechnisch verbundenen Geräts wie z. B. einem Smartphone, einem Tablet-PC oder ähnlichem) oder eine akustische Anzeige (z. B. über Lautsprecher) ausgegeben werden.

Der erwähnte Topf ist zur Verarbeitung und/oder Aufbewahrung von Lebensmitteln eingerichtet. Ist der Topf in die Küchenmaschine eingesetzt, so kann über ein Heizelement der Küchenmaschinen-Basisstation ein Aufheizen eines Topfinhalts (z. B. Lebensmitteln) erfolgen. Ferner kann in dem Topf, insbesondere im Bereich eines Topfbodens, ein Misch- und/oder Zerkleinerungswerkzeug zum Zerkleinern und/oder Mischen von Lebensmitteln angeordnet sein, wobei das Misch- oder Zerkleinerungswerkzeug bei in die Küchenmaschinen-Basisstation eingesetztem Topf mit einer Drehwelle der Küchenmaschinen-Basisstation koppelbar und in gleicher Drehgeschwindigkeit und Drehrichtung rotierbar ist. Durch die Rotation kann ein Mischen oder Zerkleinern von Lebensmitteln erfolgen.

Der Topf ist aus der Küchenmaschinen-Basisstation entnehmbar, d.h. er kann aus dieser entnommen und beispielsweise in einen Kühlschrank gestellt werden. Mit der vorliegenden Erfindung ist nun möglich, den Wiegeteller multifunktional zu verwenden, also nicht nur ein Wiegegut zu wiegen, sondern auch eine Topföffnung des Topfes lösbar zu verschließen, vorzugsweise gas- und/oder flüssigkeitsdicht. Somit kann der Wiegeteller zugleich als Deckel des Topfes eingesetzt werden, z. B. zum Frischhalten von in dem Topf angeordneten Lebensmitteln oder Speisen. Unter "gasdicht" kann zu verstehen sein, dass ein Luftaustausch zwischen Topfinnerem und Topfäußerem vermieden oder reduziert wird. Ein gasdichter und/oder flüssigkeitsdichter Verschluss kann dazu dienen, dass in dem Topfinneren gelagerte Lebensmittel oder Speisen länger haltbar sind und gelagert werden können (frisch gehalten werden können).

Hervorzuheben ist, dass die Erfinder den hier beschriebenen Wiegeteller einerseits an die Dimensionen des Topfes, insbesondere den Durchmesser der erwähnten Topföffnung, derart angepasst haben, dass der Wiegeteller auf die Topföffnung des Topfes aufgesetzt werden kann und damit die Topföffnung durch den Wiegeteller in Funktion als (lösbarer) Deckel (unter Gewährleistung eines gas- und/oder flüssigkeitsdichten Verschlusses) verschlossen kann. Andererseits ist der Wiegeteller derart ausgebildet, dass er Wiegegut aufnehmen kann (also eine typische Tellerfunktion innehat) und in Bezug zur Küchenmaschinen-Basisstation in einer Wiegestellung positionierbar ist, sodass in der Wiegestellung ein Gewicht von seitens des Wiegetellers aufgenommenem Wiegegut unter Einsatz der Wiegeeinrichtung ermittelbar ist. Der Teller berücksichtigt also auch die Bauform der Küchenmaschinen-Basisstation, um eine Positionierung in einer Wiegestellung zu gewährleisten. Entsprechend vereint der hier beschriebene Wiegeteller mehrere Funktionalitäten.

Weitere Ausgestaltungen der Erfindung sind in den Unteransprüchen angegeben. Die dort genannten Merkmale sowie weitere Ausgestaltungen der Erfindung seien nachfolgend beschrieben.

Nach einer ersten Ausgestaltung einer Küchenmaschine nach der Erfindung kann vorgesehen sein, dass der Wiegeteller als Waagschale ausgebildet ist, und eine Schalenform aufweist, wobei die Waagschale gebildet ist aus einem Waagschalenboden sowie einem in Bezug zum Waagschalenboden umlaufenden Waagschalenrand. Der Waagschalenrand schließt sich dabei unmittelbar mit seinem unteren Ende an den Waagschalenboden an und erstreckt sich in Richtung seines oberen Endes von dem Waagschalenboden weg. Unter "in Bezug zum Waagschalenboden umlaufend" ist zu verstehen, dass der Waagschalenrand den Waagschalenboden nach Waagschalenaußen im Sinne einer Mantelfläche begrenzt. Eine solche Schalenform verringert die Wahrscheinlichkeit für ein ungewünschtes Abfließen oder Herunterfallen von in der Waagschale platzierten festen oder flüssigen Stoffen, insbesondere Lebensmitteln oder Speisen. Entsprechend lassen sich Lebensmittel mittels einer Schale einfacher von einem Ort zum anderen transportieren als mit einem (flacheren) Teller oder Tablett. Auch eine Schüssel kann im Kontext der Erfindung als Schale angesehen werden. Insbesondere für flüssige, zähflüssige oder pulverförmige Lebensmittel ist die Verwendung einer Schalenform aufgrund der formbegründeten Rückhaltemöglichkeit in der Schale vorteilhaft.

Nach einer weiteren Ausgestaltung einer Küchenmaschine nach der Erfindung kann vorgesehen sein, dass an dem Waagschalenrand zumindest eine Koppelstruktur zur mechanischen und wiegetechnischen Ankopplung an eine dazu komplementäre Struktur der Küchenmaschinen-Basisstation ausgebildet ist. Nach einer weiteren Ausgestaltung einer Küchenmaschine nach der Erfindung kann vorgesehen sein, dass die zumindest eine Koppelstruktur an einer nach Waagschalen-außen weisenden Oberfläche des Waagschalenrandes ausgebildet ist, und wobei die zumindest eine Koppelstruktur eine oder mehrere Materialausbuchtungen und/oder Materialvorsprünge an dem Waagschalenrand umfasst. Dadurch dass die Koppelstruktur an einer nach Waagschalen-außen weisenden Oberfläche des Waagschalenrandes ausgebildet ist, kann sich die Koppelstruktur - im Falle einer Ausbildung als Materialausbuchtung - auch nach Waagschalen-innen erstrecken, z. B. als Materialausbeulung, die von der außenseitig angeordneten Materialausbuchtung gebildet wird. Umgekehrt kann ein an einer nach Waagschalen-außen weisenden Oberfläche ausgebildeter Materialvorsprung durch eine innenseitig des Waagschalenrandes vorliegende Materialausbuchtung gebildet sein. Unter "zumindest" einer Koppelstruktur ist zu verstehen, dass auch mehrere Koppelstrukturen an dem Waagschalenrand ausgebildet sind. Eine jeweilige Koppelstruktur (unabhängig davon, ob es sich um eine Koppelstruktur oder mehrere Koppelstrukturen handelt) kann somit eine einzige oder mehrere Materialausbuchtungen aufweisen. Gleichsam kann eine jeweilige Koppelstruktur (unabhängig davon, ob es sich um eine Koppelstruktur oder mehrere Koppelstrukturen handelt) eine einzige oder mehrere Materialvorsprünge aufweisen. Auch kann eine jeweilige Koppelstruktur (unabhängig davon, ob es sich um eine Koppelstruktur oder mehrere Koppelstrukturen handelt) eine Kombination aus einem oder mehreren Materialvorsprüngen mit einem oder mehreren Materialausbuchtungen aufweisen.

Unter einer Koppelstruktur und einer dazu "komplementären" Struktur an der Küchenmaschinen-Basisstation ist zu verstehen, dass diese Strukturen mechanisch zusammenwirken können. Ist an dem Waagschalenrand ein Materialvorsprung ausgebildet, so kann an der Küchenmaschinen-Basisstation als komplementäre Struktur eine Materialausbuchtung ausgebildet sein und umgekehrt. In diesem Fall kann der Materialvorsprung in die Materialausbuchtung eingreifen. Auch kann ein Materialvorsprung auf einem Materialsteg aufliegen. Auch Rastverbindungen (Rastnasen und dazu komplementäre Rastaufnahmen), Klemmverbindungen, Bajonetteverbindungen, Pressverbindungen, Formschlussverbindungen oder dergleichen können eine mechanische und wiegetechnische Kopplung zwischen Wiegeteller bzw. Waagschale und Küchenmaschinen-Basisstation bereitstellen.

Ein besonderer Vorteil ist, dass die Erfindung eine Ankopplung des Wiegetellers bzw. der Waagschale an ohnehin an einer Küchenmaschine vorgesehenen Strukturen ermöglicht. Der Wiegeteller kann somit als Zubehörteil für bereits bestehende Küchenmaschinen eingesetzt werden.

Nach einer weiteren Ausgestaltung einer Küchenmaschine nach der Erfindung kann vorgesehen sein, dass an dem Waagschalenrand zwei sich gegenüberliegende Koppelstrukturen zur mechanischen und wiegetechnischen Ankopplung an jeweils dazu komplementäre Strukturen der Küchenmaschinen-Basisstation ausgebildet sind. Durch eine solche gegenüberliegende Anordnung der Koppelstrukturen ist eine besonders sichere und gegen Verkippen gesicherte Anordnung der Waagschale ermöglicht. Die gegenüberliegende Anordnung der Koppelstrukturen führt zu einer gleichmäßigen Lastverteilung des in der Waagschale angeordneten Wiegeguts in Bezug zur Küchenmaschinen-Basisstation.

Durch die erwähnte mechanische Ankopplung kann automatisch eine wiegetechnische Ankopplung bereitgestellt werden, sofern die Wiegeeinrichtung der Küchenmaschinen-Basisstation derart ausgebildet ist, dass damit bei (mittelbarem oder unmittelbarem) Beaufschlagen der Küchenmaschinen-Basisstation mit einer Gewichtskraft, ein zu der wirkenden Gewichtskraft wirkendes Gewicht ermittelbar ist. In einfachen Worten wird durch die komplementären Koppelstrukturen ermöglicht, dass ein auf dem Wiegeteller oder in der Waagschale platziertes Wiegegut, die Küchenmaschinen-Basisstation mit seiner Gewichtskraft mittelbar (d.h. über mehrere Bauteile) oder unmittelbar beaufschlagt. Der Wiegeteller bzw. die Waagschale liegt durch die Ankopplung auf der Küchenmaschinen-Basisstation oder einer damit verbundenen Komponente auf.

Es sei darauf hingewiesen, dass - sofern der Topf in die Küchenmaschinen-Basisstation eingesetzt ist, auch bei auf die Topföffnung aufgesetztem Wiegeteller in Funktion eines Deckels eine mechanische und wiegetechnische Ankopplung an die Küchenmaschinen-Basisstation bereitgestellt ist, nämlich mittelbar über den Topf. Auch dann kann der Wiegeteller bzw. die Waagschale zum Abwiegen von Wiegegut eingesetzt werden. Dies kann ebenso als "Wiegestellung" im Sinne der Erfindung verstanden werden. In diesem Fall wird durch die Form des Wiegetellers bzw. der Waagschale, welche die Deckelfunktion zum Verschließen der Topföffnung des Topfes erlaubt, ebenfalls eine Koppelstruktur zur (mittelbaren) mechanischen und wiegetechnischen Kopplung an die Küchenmaschinen-Basisstation bereitgestellt.

Nach einer weiteren Ausgestaltung einer Küchenmaschine nach der Erfindung kann vorgesehen sein, dass die Küchenmaschinen-Basisstation zwei sich gegenüberliegende Verriegelungsarme aufweist, die - sofern der Topf in die Küchenmaschinen-Basisstation eingesetzt ist - zum Verriegeln eines auf den Topf aufgesetzten Topfdeckels oder des Topfes als solchen ausgebildet sind, und wobei eine jeweilige der an dem Waagschalenrand ausgebildeten zwei sich gegenüberliegenden Koppelstrukturen zur mechanischen Ankopplung an eine jeweilige dazu komplementäre Struktur eines jeweiligen Verriegelungsarmes ausgebildet ist, wobei die Waagschale bei Ankopplung an die Verriegelungsarme die Wiegestellung einnimmt. Eine solche Ankopplung kann insbesondere bei jenen unter der Marke Thermomix^{®} vertriebenen Küchenmaschinen erfolgen. Damit können an einer Küchenmaschinen-Basisstation ohnehin vorhandene Bauteile für die Ankopplung der Waagschale unmittelbar genutzt werden. Es ist auch möglich, dass eine bestimmte Geometrie- oder Formkomponente der Küchenmaschinen-Basisstation zur Ankopplung der Waagschale verwendet wird. Beispielsweise kann bei jenen unter der Marke Monsieur Cuisine^{®} vertriebenen Küchenmaschinen eine entsprechende Ankopplung der zumindest einen Koppelstruktur der Waagschale an einem kegelstumpfförmigen Topf-Aufnahmeabschnitt in der Küchenmaschinen-Basisstation erfolgen.

Nach einer weiteren Ausgestaltung einer Küchenmaschine nach der Erfindung kann vorgesehen sein, dass der Wiegeteller, insbesondere der als Waagschale ausgebildete Wiegeteller, dazu ausgebildet ist,- sofern dieser als Deckel auf eine Topföffnung des Topfes aufgesetzt ist - die Topföffnung nach Topf-außen gas- und/oder flüssigkeitsdicht zu verschließen, wobei dies unabhängig von einem Einsetzen des Topfes in die Küchenmaschinen-Basisstation oder einer externen Anordnung des Topfes dazu ist. Der Wiegeteller (die Waagschale) kann somit als Deckel zum Verschließen des Topfes eingesetzt werden, unabhängig davon ob der Topf in die Küchenmaschinen-Basisstation eingesetzt ist oder nicht. Dies ermöglicht eine multifunktionale, zumindest aber bifunktionale Verwendung des Wiegetellers (der Waagschale) zum Abwiegen von Wiegegut und zum Verschließen einer Topföffnung des Topfes.

Nach einer weiteren Ausgestaltung einer Küchenmaschine nach der Erfindung kann vorgesehen sein, dass der Wiegeteller, insbesondere der als Waagschale ausgebildete Wiegeteller, eine umlaufende Dichtlippe aufweist, die gewährleistet, dass der Wiegeteller - sofern dieser als Deckel auf die Topföffnung des Topfes aufgesetzt ist - die Topföffnung nach Topf-außen gas- und/oder flüssigkeitsdicht verschließt, wobei dies unabhängig von einem Einsetzen des Topfes in die Küchenmaschinen-Basisstation oder einer externen Anordnung des Topfes dazu ist. Die Dichtlippe liegt bei auf die Topföffnung aufgesetztem Wiegeteller vorzugsweise an einer Mantelfläche oder einem oberen Rand des Topfes (im Bereich der Topföffnung) an und dichtet den Topf relativ zum Wiegeteller (zur Waagschale) ab. Die Dichtlippe kann insbesondere aus Gummi oder Kunststoff gefertigt sein. Der Wiegeteller, insbesondere der Waagschalenboden und Waagschalenrand, können aus Gummi, Kunststoff, oder Metall gefertigt sein. Die Dichtlippe kann - sofern diese aus Gummi gefertigt ist - an den Wiegeteller bzw. den Waagschalenrand anvulkanisiert sein. Im Falle einer Fertigung der Dichtlippe aus Kunststoff kann diese an den Wiegeteller bzw. an den Waagschalenrand angeformt sein. Auch eine anderweitige Befestigung, z. B. über eine Klebeverbindung ist möglich. Es können zudem mehrere umlaufende Dichtlippen an dem Wiegeteller angeordnet sein. Eine Anvulkanisierung bzw. Anformung einer Dichtlippe an den Wiegeteller bzw. Waagschalenrand führt zu einer besonders langlebigen Verbindung.

Nach einer weiteren Ausgestaltung einer Küchenmaschine nach der Erfindung kann vorgesehen sein, dass die Waagschale eine Ausgießabschnitt, insbesondere eine Ausgießlasche aufweist, womit ein vereinfachtes Ausgießen von in der Waagschale aufgenommenen Substanzen, beispielsweise Flüssigkeiten, aus der Waagschale ermöglicht ist. Der Ausgießabschnitt bzw. die Ausgießlasche kann an den Waagschalenrand angeformt bzw. daran ausgebildet sein. Nach einer weiteren Ausgestaltung einer Küchenmaschine nach der Erfindung kann vorgesehen sein, dass der Ausgießabschnitt, insbesondere die Ausgießlasche, zugleich die Funktion eines Griffs hat. Beispielsweise kann die Waagschale - sofern diese in Ihrer Funktion als Deckel auf den Topf aufgesetzt ist - über den Ausgießabschnitt (die Ausgießlasche) in ihrer Griffunktion in besonders bequemer und einfacher Weise von dem Topf gezogen und gelöst werden.

Nach einer weiteren Ausgestaltung einer Küchenmaschine nach der Erfindung kann vorgesehen sein, dass in dem Topf, insbesondere im Bereich eines Topfbodens, ein Misch- und/oder Zerkleinerungswerkzeug zum Zerkleinern und/oder Mischen von Lebensmitteln anordenbar ist, wobei das Misch- oder Zerkleinerungswerkzeug bei in die Küchenmaschinen-Basisstation eingesetztem Topf mit einer Drehwelle der Küchenmaschinen-Basisstation koppelbar und in gleicher Drehgeschwindigkeit und Drehrichtung rotierbar ist. Das Misch- und/oder Zerkleinerungswerkzeug kann fest in dem Topf installiert sein, jedoch auch lösbar in diesem montierbar sein. Eine lösbare Anordnung ist aus Reinigungsgründen vorteilhaft. Das Misch- und/oder Zerkleinerungswerkzeug kann ein Mixmesser sein.

Nach einer weiteren Ausgestaltung einer Küchenmaschine nach der Erfindung kann vorgesehen sein, dass die Küchenmaschine ferner ein Heizelement zum Erhitzen von in dem Topf aufgenommenen Lebensmitteln umfasst. Zum Ansteuern des Heizelements und auch des Misch- und/oder Zerkleinerungswerkzeugs kann die Küchenmaschine eine, vorzugsweise in der Küchenmaschinen-Basisstation angeordnete, Steuereinheit aufweisen. Die Steuereinheit kann zudem die Wiegeeinrichtung steuern. Ferner kann die Steuereinheit mit der erwähnten Anzeigeeinheit (Anzeige) signaltechnisch verbunden sein. Die Anzeigeeinheit kann ein Display umfassen.

Weiterhin betrifft die vorliegende Offenbarung einen Wiegeteller zur Verwendung in einer Küchenmaschine der beschriebenen Art, die Küchenmaschine umfassend eine Küchenmaschinen-Basisstation mit einer Wiegeeinrichtung sowie einen zur Verarbeitung und/oder Aufbewahrung von Lebensmitteln eingerichteten Topf, der in die Küchenmaschinen-Basisstation einsetzbar ist, wobei der Wiegeteller zur Aufnahme von Wiegegut ausgebildet ist, wobei der Wiegeteller zudem ausgebildet ist in Bezug zu der Küchenmaschinen-Basisstation in einer Wiegestellung positioniert zu werden, und wobei der Wiegeteller zudem ausgebildet ist auf eine Topföffnung des Topfes aufgesetzt zu werden und den Topf als Deckel lösbar zu verschließen.

Nach einer ersten Ausgestaltung eines Wiegetellers nach der vorliegenden Offenbarung kann vorgesehen sein, dass der Wiegeteller als Waagschale ausgebildet ist, und eine Schalenform aufweist, wobei die Waagschale gebildet ist aus einem Waagschalenboden sowie einem in Bezug zum Waagschalenboden umlaufenden Waagschalenrand.

Nach einer weiteren Ausgestaltung eines Wiegetellers nach der vorliegenden Offenbarung kann vorgesehen sein, dass an dem Waagschalenrand zumindest eine Koppelstruktur zur mechanischen und wiegetechnischen Ankopplung an eine dazu komplementäre Struktur der Küchenmaschinen-Basisstation ausgebildet ist.

Nach einer weiteren Ausgestaltung eines Wiegetellers nach der vorliegenden Offenbarung kann vorgesehen sein, dass die zumindest eine Koppelstruktur an einer nach Waagschalen-außen weisenden Oberfläche des Waagschalenrandes ausgebildet ist, und wobei die zumindest eine Koppelstruktur eine oder mehrere Materialausbuchtungen und/oder Materialvorsprünge an dem Waagschalenrand umfasst.

Nach einer weiteren Ausgestaltung eines Wiegetellers nach der vorliegenden Offenbarung kann vorgesehen sein, dass an dem Waagschalenrand zwei sich gegenüberliegende Koppelstrukturen zur mechanischen und wiegetechnischen Ankopplung an jeweils dazu komplementäre Strukturen der Küchenmaschinen-Basisstation ausgebildet sind.

Nach einer weiteren Ausgestaltung eines Wiegetellers nach der vorliegenden Offenbarung kann vorgesehen sein, dass der Wiegeteller, insbesondere der als Waagschale ausgebildete Wiegeteller, dazu ausgebildet ist, - sofern dieser als Deckel auf eine Topföffnung des Topfes aufgesetzt ist - die Topföffnung nach Topf-außen gas- und/oder flüssigkeitsdicht zu verschließen, wobei dies unabhängig von einem Einsetzen des Topfes in die Küchenmaschinen-Basisstation oder einer externen Anordnung des Topfes dazu ist.

Nach einer weiteren Ausgestaltung eines Wiegetellers nach der vorliegenden Offenbarung kann vorgesehen sein, dass der Wiegeteller, insbesondere der als Waagschale ausgebildete Wiegeteller, eine umlaufende Dichtlippe aufweist, die gewährleistet, dass der Wiegeteller - sofern dieser als Deckel auf die Topföffnung des Topfes aufgesetzt ist - die Topföffnung nach Topf-außen gas- und/oder flüssigkeitsdicht verschließt, wobei dies unabhängig von einem Einsetzen des Topfes in die Küchenmaschinen-Basisstation oder einer externen Anordnung des Topfes dazu ist.

Nach einer weiteren Ausgestaltung eines Wiegetellers nach der vorliegenden Offenbarung kann vorgesehen sein, dass die Waagschale eine Ausgießabschnitt, insbesondere eine Ausgießlasche aufweist, womit ein vereinfachtes Ausgießen von in der Waagschale aufgenommenen Substanzen, beispielsweise Flüssigkeiten, aus der Waagschale ermöglicht ist.

Nach einer weiteren Ausgestaltung eines Wiegetellers nach der vorliegenden Offenbarung kann vorgesehen sein, dass der Ausgießabschnitt, insbesondere die Ausgießlasche, zugleich die Funktion eines Griffs hat.

Sind bestimmte Merkmale aktiv formuliert/bezeichnet (z. B. "ist angeordnet") so ist dem Fachmann klar, dass ein solches Merkmal im Kontext der Erfindung für sich genommen auch passiv (funktional) formuliert/bezeichnet werden kann (z. B. "ist anordenbar").

Weitere Ausgestaltungen der Erfindung sind in den nachfolgend beschriebenen Figuren gezeigt. Dort zeigen:
- Fig. 1a: eine perspektivische Ansicht eines Topfes mit oberhalb einer Topföffnung dargestelltem - nicht auf den Topf aufgesetztem - Wiegeteller, wobei der Wiegeteller nach einer ersten Ausführungsform der Erfindung ausgebildet ist;
- Fig. 1b: eine perspektivische Ansicht des Topfes aus Fig. 1a mit auf die Topföffnung aufgesetztem und die Topföffnung verschließendem Wiegeteller, wobei der Wiegeteller nach der ersten Ausführungsform der Erfindung ausgebildet ist;
- Fig. 2: eine perspektivische Darstellung einer Küchenmaschinen-Basisstation und eines in Wiegestellung positionierten Wiegetellers;
- Fig. 3a: einen Wiegeteller nach der ersten Ausführungsform der Erfindung in perspektivischer Ansicht;
- Fig. 3b: den Wiegeteller nach Fig. 3a in einer Seitenansicht;
- Fig. 4a: einen Wiegeteller nach einer zweiten Ausführungsform der Erfindung in perspektivischer Ansicht;
- Fig. 4b: den Wiegeteller nach Fig. 4a in einer Seitenansicht.

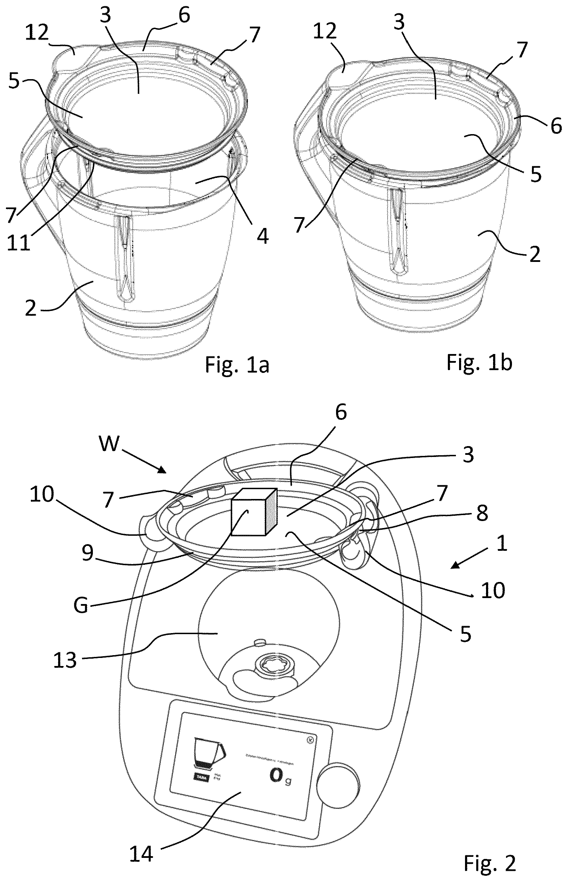

Die Erfindung betrifft wie vorangehend beschrieben, eine Küchenmaschine und einen Wiegeteller 3 zur Verwendung in einer Küchenmaschine. Die Küchenmaschine umfasst zunächst eine Küchenmaschinen-Basisstation 1 wie beispielsweise in der Figur 2 dargestellt. Die Küchenmaschinen-Basisstation 1 umfasst eine nicht dargestellte Wiegeeinrichtung. Ferner umfasst die Küchenmaschine einen zur Verarbeitung und/oder Aufbewahrung von Lebensmitteln eingerichteten Topf 2, der in die Küchenmaschinen-Basisstation 1 einsetzbar ist. Ein solcher Topf 2 ist in den Figuren 1a und 1b gemeinsam mit dem Wiegeteller 3 dargestellt. Die Küchenmaschinen-Basisstation 1 weist einen Aufnahmebereich 13 auf, in den der Topf 2 einsetzbar ist. Ferner umfasst die Küchenmaschinen-Basisstation 1 zwei sich gegenüberliegende Verriegelungsarme 10, die - sofern der Topf 2 in die Küchenmaschinen-Basisstation 1 eingesetzt ist - zum Verriegeln eines auf den Topf 2 aufgesetzten Topfdeckels oder des Topfes 2 als solchen ausgebildet sind.

Der Wiegeteller 3 ist zur Aufnahme von Wiegegut G ausgebildet (illustriert in Fig. 2). Ferner ist der Wiegeteller 3 in Bezug zur Küchenmaschinen-Basisstation 1 in einer Wiegestellung W positionierbar (vgl. Fig. 2), wobei in der Wiegestellung W ein Gewicht von seitens des Wiegetellers 3 aufgenommenem Wiegegut G unter Einsatz der Wiegeeinrichtung ermittelbar ist. Ein so ermitteltes Gewicht kann einem Nutzer über eine Anzeigeeinheit 14 angezeigt werden, beispielsweise optisch.

Der Wiegeteller 3 ist zudem dazu ausgebildet ist, auf eine Topföffnung 4 des Topfes 2 aufgesetzt zu werden und den Topf 2 als Deckel lösbar zu verschließen. Dies ist in den Figuren 1a, 1b beispielhaft gezeigt. Figur 1a zeigt den Wiegeteller 3 in einer noch nicht auf den Topf 2 aufgesetzten Stellung oberhalb der Topföffnung 4, während Figur 1b den Wiegeteller 3 in einer auf den Topf 2 aufgesetzten Stellung zeigt. In einer Stellung gemäß Fig. 1b ist die Topföffnung 4 durch den Wiegeteller verschlossen. Über den Ausgießabschnitt 12 kann der Wiegeteller 3 in bequemer Weise von dem Topf 2 entfernt und gelöst werden. In diesem Fall dient der Ausgießabschnitt 12 als Griff. Der Ausgießabschnitt 12 kann in Form einer Ausgießlasche ausgebildet sein. Mit dem Ausgießabschnitt 12 ist grundsätzlich ein vereinfachtes Ausgießen von in der Waagschale aufgenommenen Substanzen, beispielsweise Flüssigkeiten, aus der Waagschale ermöglicht. Ist der Wiegeteller 3 auf den Topf 2 aufgesetzt und der Topf 2 zugleich in den Aufnahmebereich 13 der Küchenmaschinen-Basisstation 1 eingesetzt, so kann auch diese Stellung eine Wiegestellung W bereitstellen und Wiegegut G auf dem Wiegeteller 3 positioniert und gewogen werden.

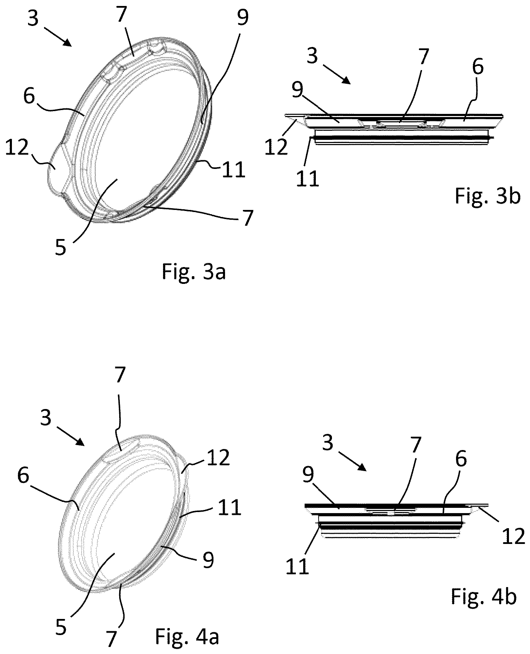

Wie in den Figuren 1a, 1b zu erkennen und in den Figuren 3a, 3b und 4a, 4b detaillierter gezeigt, ist der Wiegeteller 3 als Waagschale ausgebildet und weist eine Schalenform auf, wobei die Waagschale gebildet ist aus einem Waagschalenboden 5 sowie einem in Bezug zum Waagschalenboden 5 umlaufenden Waagschalenrand 6. An einer nach Waagschalen-außen weisenden Oberfläche 9 des Waagschalenrandes 6 sind zwei Koppelstrukturen 7 ausgebildet, wobei die Koppelstrukturen 7 jeweils in Bezug auf die nach Waagschalen-außen weisende Oberfläche 9 des Waagschalenrandes 6 eine (Variante nach Fig. 4a, 4b) oder mehrere Materialausbuchtungen (Variante nach Fig. 3a, 3b) umfassen. Diese Koppelstrukturen 7 sind auch nach Waagschalen-innen sichtbar, nämlich in Form von Ausstülpungen. In Bezug auf die Waagschale sind die beiden Koppelstrukturen 7 gegenüberliegend angeordnet.

Wie konkret in Fig. 2 gezeigt, kann eine jeweilige der zwei an dem Waagschalenrand 6 ausgebildeten und sich gegenüberliegenden Koppelstrukturen 7 zur mechanischen (und wiegetechnischen) Ankopplung an eine jeweilige dazu komplementäre Struktur 8 eines jeweiligen Verriegelungsarmes 10 genutzt werden, wobei die Waagschale bei Ankopplung an die Verriegelungsarme 10 die Wiegestellung W einnimmt.

Wie in den Figuren 3b und 4b gezeigt, weist der als Waagschale ausgebildete Wiegeteller 3 eine umlaufende Dichtlippe 11 auf, die gewährleistet, dass der Wiegeteller 3 - sofern dieser als Deckel auf die Topföffnung 4 des Topfes 2 aufgesetzt ist - die Topföffnung 4 nach Topf-außen gas- und/oder flüssigkeitsdicht verschließt, wobei dies unabhängig von einem Einsetzen des Topfes 2 in die Küchenmaschinen-Basisstation 1 oder einer externen Anordnung des Topfes 2 dazu ist.

### Bezugszeichenliste

- 1: Küchenmaschinen-Basisstation
- 2: Topf
- 3: Wiegeteller
- 4: Topföffnung
- 5: Waagschalenboden
- 6: Waagschalenrand
- 7: Koppelstruktur
- 8: Struktur
- 9: Oberfläche
- 10: Verriegelungsarme
- 11: Dichtlippe
- 12: Ausgießabschnitt
- 13: Aufnahmebereich
- 14: Anzeigeeinheit
- G: Wiegegut
- W: Wiegestellung

## Patentansprüche

1. Küchenmaschine, umfassend
a. eine Küchenmaschinen-Basisstation (1) mit einer Wiegeeinrichtung
b. einen zur Verarbeitung und/oder Aufbewahrung von Lebensmitteln eingerichteten Topf (2), der in die Küchenmaschinen-Basisstation (1) einsetzbar ist,
c. und einen zur Aufnahme von Wiegegut (G) ausgebildeten Wiegeteller (3), der in Bezug zur Küchenmaschinen-Basisstation (1) in einer Wiegestellung (W) positionierbar ist, wobei in der Wiegestellung (W) ein Gewicht von seitens des Wiegetellers (3) aufgenommenem Wiegegut (G) unter Einsatz der Wiegeeinrichtung ermittelbar ist,
**dadurch gekennzeichnet, dass** der Wiegeteller (3) zudem dazu ausgebildet ist, auf eine Topföffnung (4) des Topfes (2) aufgesetzt zu werden und den Topf (2) als Deckel lösbar zu verschließen.

2. Küchenmaschine nach Anspruch 1, wobei der Wiegeteller (3) als Waagschale ausgebildet ist, und eine Schalenform aufweist, wobei die Waagschale gebildet ist aus einem Waagschalenboden (5) sowie einem in Bezug zum Waagschalenboden (5) umlaufenden Waagschalenrand (6).

3. Küchenmaschine nach Anspruch 2, wobei an dem Waagschalenrand (6) zumindest eine Koppelstruktur (7) zur mechanischen und wiegetechnischen Ankopplung an eine dazu komplementäre Struktur (8) der Küchenmaschinen-Basisstation (1) ausgebildet ist.

4. Küchenmaschine nach Anspruch 3, wobei die zumindest eine Koppelstruktur (7) an einer nach Waagschalen-außen weisenden Oberfläche (9) des Waagschalenrandes (6) ausgebildet ist, und wobei die zumindest eine Koppelstruktur (7) eine oder mehrere Materialausbuchtungen und/oder Materialvorsprünge an dem Waagschalenrand (6) umfasst.

5. Küchenmaschine nach Anspruch 3 oder 4, wobei an dem Waagschalenrand (6) zwei sich gegenüberliegende Koppelstrukturen (7) zur mechanischen und wiegetechnischen Ankopplung an jeweils dazu komplementäre Strukturen (8) der Küchenmaschinen-Basisstation (1) ausgebildet sind.

6. Küchenmaschine nach Anspruch 5, wobei die Küchenmaschinen-Basisstation (1) zwei sich gegenüberliegende Verriegelungsarme (10) aufweist, die - sofern der Topf (2) in die Küchenmaschinen-Basisstation (1) eingesetzt ist - zum Verriegeln eines auf den Topf (2) aufgesetzten Topfdeckels oder des Topfes (2) als solchen ausgebildet sind, und wobei eine jeweilige der an dem Waagschalenrand (6) ausgebildeten zwei sich gegenüberliegenden Koppelstrukturen (7) zur mechanischen Ankopplung an eine jeweilige dazu komplementäre Struktur (8) eines jeweiligen Verriegelungsarmes (10) ausgebildet ist, wobei die Waagschale bei Ankopplung an die Verriegelungsarme (10) die Wiegestellung (W) einnimmt.

7. Küchenmaschine nach einem der vorangehenden Ansprüche, wobei der Wiegeteller (3), insbesondere der als Waagschale ausgebildete Wiegeteller (3), dazu ausgebildet ist,- sofern dieser als Deckel auf eine Topföffnung (4) des Topfes (2) aufgesetzt ist - die Topföffnung (4) nach Topf-außen gas- und/oder flüssigkeitsdicht zu verschließen, wobei dies unabhängig von einem Einsetzen des Topfes (2) in die Küchenmaschinen-Basisstation (1) oder einer externen Anordnung des Topfes (2) dazu ist.

8. Küchenmaschine nach Anspruch 7, wobei der Wiegeteller (3), insbesondere der als Waagschale ausgebildete Wiegeteller (3), eine umlaufende Dichtlippe (11) aufweist, die gewährleistet, dass der Wiegeteller (3) - sofern dieser als Deckel auf die Topföffnung (4) des Topfes (2) aufgesetzt ist - die Topföffnung (4) nach Topf-außen gas- und/oder flüssigkeitsdicht verschließt, wobei dies unabhängig von einem Einsetzen des Topfes (2) in die Küchenmaschinen-Basisstation (1) oder einer externen Anordnung des Topfes (2) dazu ist.

9. Küchenmaschine nach einem der vorangehenden Ansprüche, wobei die Waagschale (3) einen Ausgießabschnitt (12), insbesondere eine Ausgießlasche aufweist, womit ein vereinfachtes Ausgießen von in der Waagschale aufgenommenen Substanzen, beispielsweise Flüssigkeiten, aus der Waagschale ermöglicht ist.

10. Küchenmaschine nach Anspruch 9, wobei der Ausgießabschnitt (12), insbesondere die Ausgießlasche, zugleich die Funktion eines Griffs hat.

11. Küchenmaschine nach einem der vorangehenden Ansprüche, wobei in dem Topf (2), insbesondere im Bereich eines Topfbodens, ein Misch- und/oder Zerkleinerungswerkzeug zum Zerkleinern und/oder Mischen von Lebensmitteln anordenbar ist, wobei das Misch- oder Zerkleinerungswerkzeug bei in die Küchenmaschinen-Basisstation (1) eingesetztem Topf (2) mit einer Drehwelle der Küchenmaschinen-Basisstation (1) koppelbar und in gleicher Drehgeschwindigkeit und Drehrichtung rotierbar ist.

12. Küchenmaschine nach einem der vorangehenden Ansprüche, ferner umfassend ein Heizelement zum Erhitzen von in dem Topf (2) aufgenommenen Lebensmitteln.

## Claims

1. A kitchen appliance, comprising
a. a kitchen appliance base station (1) with a weighing device,
b. a pot (2) which is designed to process and/or store food and which can be inserted into the kitchen appliance base station (1),
c. and a weighing plate (3) which is designed to receive goods (G) to be weighed and which can be positioned in a weighing position (W) relative to the kitchen appliance base station (1), wherein a weight of goods (G) received by the weighing plate (3) can be ascertained in the weighing position (W) using the weighing device,
**characterized in that**
the weighing plate (3) is additionally designed to be placed on a pot opening (4) of the pot (2) and to releasably close the pot (2) in the manner of a lid.

2. The kitchen appliance according to Claim **1,** wherein the weighing plate (3) is configured as a scale pan and has a bowl shape, wherein the scale pan is formed from a scale pan base (5) and from a circumferential scale pan edge (6) relative to the scale pan base (5).

3. The kitchen appliance according to Claim 2, wherein at least one coupling structure (7) is formed on the scale pan edge (6) for mechanical and weighing-technical coupling to a structure (8) of the kitchen appliance base station (1) complementary thereto.

4. The kitchen appliance according to Claim 3, wherein the at least one coupling structure (7) is formed on a surface (9) of the scale pan edge (6) pointing towards the exterior of the scale pan, and wherein the at least one coupling structure (7) comprises one or several material indentations and/or material projections on the scale pan edge (6).

5. The kitchen appliance according to Claim 3 or 4, wherein two coupling structures (7), lying opposite one another, are formed on the scale pan edge (6) for mechanical and weighing technical coupling to structures (8) of the kitchen appliance base station (1) which are respectively complementary thereto.

6. The kitchen appliance according to Claim 5, wherein the kitchen appliance base station (1) has two locking arms (10), lying opposite one another, which - in so far as the pot (2) is inserted into the kitchen appliance base station (1) - are formed for the locking of a pot lid, placed onto the pot (2), or of the pot (2) as such, and wherein a respective one of the two coupling structures (7) formed on the scale pan edge (6), lying opposite one another, is formed for mechanical coupling to a respective structure (8), complementary thereto, of a respective locking arm (10), wherein the scale pan, on coupling to the locking arms (10), takes up the weighing position (W).

7. The kitchen appliance according to one of the preceding claims, wherein the weighing plate (3), in particular the weighing plate (3) configured as a scale pan, is designed - in so far as the latter is placed onto a pot opening (4) of the pot (2) as a lid - to close the pot opening (4) in a gas-tight and/or fluid-tight manner towards the exterior of the pot, wherein this is irrespective of an inserting of the pot (2) into the kitchen appliance base station (1) or of an external arrangement of the pot (2) thereto.

8. The kitchen appliance according to Claim 7, wherein the weighing plate (3), in particular the weighing plate (3) configured as a scale pan, has a circumferential sealing lip (11), which ensures that the weighing plate (3) - in so far as the latter is placed onto the pot opening (4) of the pot (2) as a lid - closes the pot opening (4) in a gas-tight and/or fluid-tight manner towards the exterior of the pot, wherein this is irrespective of an inserting of the pot (2) into the kitchen appliance base station (1) or of an external arrangement of the pot (2) thereto.

9. The kitchen appliance according to one of the preceding claims, wherein the scale pan (3) has a pouring section (12), in particular a pouring lug, with which a simplified pouring is enabled of substances received in the scale pan, for example fluids, out of the scale pan.

10. The kitchen appliance according to Claim 9, wherein the pouring section (12), in particular the pouring lug, has at the same time the function of a handle.

11. The kitchen appliance according to one of the preceding claims, wherein a mixing- and/or chopping tool is able to be arranged in the pot (2), in particular in the region of a pot base, for the chopping and/or mixing of food, wherein, with the pot (2) inserted into the kitchen appliance base station (1), the mixing- or chopping tool is able to be coupled with a rotary shaft of the kitchen appliance base station (1) and is able to be rotated in the same rotation speed and rotation direction.

12. The kitchen appliance according to one of the preceding claims, further comprising a heating element for the heating of food received in the pot (2).

## Revendications

1. Robot culinaire, comprenant
a. un ensemble de base de robot culinaire (1) avec un dispositif de pesée,
b. un bol (2) agencé pour traiter et/ou conserver des denrées alimentaires, qui peut être introduit dans l'ensemble de base du robot culinaire (1),
c. et un plateau de pesée (3) constitué pour recevoir du produit à peser (G), qui peut être positionné dans une position de pesée (W) par rapport à l'ensemble de base du robot culinaire (1), sachant que dans la position de pesée (W), un poids du produit à peser (G) réceptionné du côté du plateau de pesée (3) peut être déterminé en utilisant le dispositif de pesée,
**caractérisé en ce que**
le plateau de pesée (3) est constitué pour être posé sur une ouverture de bol (4) du bol (2) et fermer le bol (2) de façon amovible en tant que couvercle.

2. Robot culinaire selon la revendication 1, sachant que le plateau de pesée (3) est constitué sous la forme d'une coque de pesée et comporte une forme de coque, sachant que la coque de pesée est constituée d'un fond de coque de pesée (5) ainsi que d'un rebord de coque de pesée (6) périphérique par rapport au fond de coque de pesée (5).

3. Robot culinaire selon la revendication 2, sachant que sur le rebord de coque de pesée (6) est constituée au moins une structure de couplage (7) pour le couplage mécanique et de technique de pesée sur une structure (8) complémentaire à celle-ci de l'ensemble de base du robot culinaire (1).

4. Robot culinaire selon la revendication 3, sachant qu'au moins une structure de couplage (7) est constituée sur une surface (9) tournée vers l'extérieur de coque de pesée du rebord de coque de pesée (6) et sachant qu'au moins une structure de couplage (7) comprend un ou plusieurs évasements de matière et/ou saillies de matière sur le rebord de coque de pesée (6).

5. Robot culinaire selon la revendication 3 ou 4, sachant que sur le rebord de coque de pesée (6) sont constituées deux structures de couplage (7) s'opposant pour le couplage mécanique et de technique de pesée aux structures (8) respectivement complémentaires à celles-ci de l'ensemble de base du robot culinaire (1).

6. Robot culinaire selon la revendication 5, sachant que l'ensemble de base du robot culinaire (1) comporte deux bras de verrouillage (10) s'opposant, qui sont, dans la mesure où le bol (2) est inséré dans l'ensemble de base du robot culinaire (1), constitués comme tels pour verrouiller un couvercle de bol posé sur le bol (2) ou le bol (2) et sachant qu'une structure de couplage respective des deux structures de couplage (7) s'opposant constituées sur le rebord de coque de pesée (6) est constituée pour le couplage mécanique à une structure (8) complémentaire respective à celles-ci d'un bras de verrouillage respectif (10), sachant que la coque de pesée adopte la position de pesée (W) lors du couplage aux bras de verrouillage (10).

7. Robot culinaire selon l'une quelconque des revendications précédentes, sachant que le plateau de pesée (3), en particulier le plateau de pesée (3) constitué sous la forme d'une coque de pesée, est constitué, dans la mesure où celui-ci est posé en tant que couvercle sur une ouverture de bol (4) du bol (2), pour fermer l'ouverture de bol (4) de façon étanche aux gaz et/ou aux liquides vers l'extérieur du bol, sachant que celui-ci est indépendant à cet effet d'une insertion du bol (2) dans l'ensemble de base du robot culinaire (1) ou d'une mise en place externe du bol (2).

8. Robot culinaire selon la revendication 7, sachant que le plateau de pesée (3), en particulier le plateau de pesée (3) constitué sous la forme d'une coque de pesée, comporte une lèvre d'étanchéité (11) périphérique, qui garantit que le plateau de pesée (3), dans la mesure où celui-ci est posé en tant que couvercle sur l'ouverture de bol (4) du bol (2), ferme l'ouverture de bol (4) de façon étanche aux gaz et/ou aux liquides vers l'extérieur du bol, sachant que celui-ci est indépendant à cet effet d'une insertion du bol (2) dans l'ensemble de base du robot culinaire (1) ou d'une mise en place externe du bol (2).

9. Robot culinaire selon l'une quelconque des revendications précédentes, sachant que le plateau de pesée (3) comporte une section verseuse (12), en particulier un bec verseur, lequel permet un versage simplifié depuis la coque de pesée de substances, par exemple de liquides, réceptionnés dans le plateau de pesée.

10. Robot culinaire selon la revendication 9, sachant que la section verseuse (12), en particulier le bec verseur, possède aussi une poignée.

11. Robot culinaire selon l'une quelconque des revendications précédentes, sachant que dans le bol (2), en particulier dans la zone du fond de bol, peut être disposé un outil de mélange et/ou de broyage pour broyer et/ou mélanger des denrées alimentaires, sachant que l'outil de mélange ou de broyage peut être couplé à un arbre rotatif de l'ensemble de base du robot culinaire (1) le bol (2) étant introduit dans l'ensemble de base du robot culinaire (1) et peut être tourné à la même vitesse de rotation et dans le même sens de rotation.

12. Robot culinaire selon l'une quelconque des revendications précédentes, comprenant en plus un élément chauffant pour réchauffer des denrées alimentaires réceptionnées dans le bol (2).
